# EUROPÄISCHE PATENTSCHRIFT

(11) **EP 2 357 146 B1**
(45) Veröffentlichungstag und Bekanntmachung des Hinweises auf die Patenterteilung: **01.05.2013**
(21) Anmeldenummer: 11154755.0
(22) Anmeldetag: 17.02.2011
(51) Int. Cl.: B65G 47/14, B65G 47/256, B29C 49/42

(54) **Rollensortiereinrichtung und Sortierverfahren zum Sortieren von Vorformlingen**
Roller sorting device and sorting method for sorting pre-forms
Dispositif de tri à rouleaux et procédé de tri destiné à trier des préformes

(30) Priorität: 17.02.2010 DE 102010008367
(43) Veröffentlichungstag der Anmeldung: 17.08.2011
(73) Patentinhaber: Krones AG, 93073 Neutraubling (DE)
(72) Erfinder: Beutl, Jürgen, 93161, Reichenstetten (DE); Seidl, Andreas, 93093, Donaustauf (DE); Seger, Martin, 92318, Neumarkt i. d. Opf. (DE); Michel, Jörg, 95131, Schwarzenbach a. W. (DE); Lehner, Jürgen, 93087, Alteglofsheim (DE)
(74) Vertreter: Bittner, Bernhard

(56) Entgegenhaltungen:
- EP-A1- 2 221 261
- WO-A1-02/36466
- DE-A1- 4 202 735
- DE-A1-102009 016 593
- FR-A1- 2 864 050
- JP-A- 2005 219 906

## Beschreibung

Die Erfindung bezieht sich auf eine Rollensortiereinrichtung nach Anspruch 1 und ein Sortierverfahren nach Anspruch 10 zum Sortieren von Vorformlingen, sowie eine Transportvorrichtung mit einer solchen Rollensortiereinrichtung.

Vorformlinge aus Kunststoff, wie beispielsweise Polyethylenterephthalat (PET), Polypropylen (PP) usw., finden insbesondere in der Getränkeindustrie zur Herstellung von Behältern, beispielsweise Flaschen Verwendung. Die Vorformlinge werden hierbei Behälterbehandlungsanlagen zugeführt, welche die Vorformlinge in einer Heizvorrichtung erwärmt, um sie dann in einer Streckblasvorrichtung mittels eines Streckblasvorgangs zu Kunststoffbehältern zu expandieren und zu strecken. Anschließend werden die Kunststoffbehälter mittels eines Transportsystems zu weiteren Behandlungsvorrichtungen, wie beispielsweise einer Reinigungsvorrichtung, einer Etikettiervorrichtung, einer Füllvorrichtung, einer Sortiervorrichtung, einer Verpackungsvorrichtung, usw. transportiert.

Die Vorformlinge werden den Behälterbehandlungsanlagen in der Regel zunächst unsortiert zugeführt. Hierbei ist unsortiert in dem Sinne zu verstehen, dass die Vorformlinge zuerst in eine Aufnahmeeinrichtung gegeben werden, in welcher zwar zumeist Vorformlinge des gleichen Typs, wie Größe, Material, usw., vorhanden sind, jedoch die Vorformlinge in beliebigen Richtungen zueinander orientiert sind. Für eine Behandlung der Vorformlinge in der Behälterbehandlungsanlage müssen die Vorformlinge jedoch alle in einer vorbestimmten Richtung zueinander ausgerichtet sein. Zu diesem Zwecke werden im Stand der Technik beispielsweise auch Rollensortiereinrichtungen eingesetzt.

US 2004/0109747 A1 beschreibt ein System zum Zuführen von Vorformlingen insbesondere für eine Behälterblasmaschine. Dieses System hat einen Fülltrichter, an dessen Boden zwei im Wesentlichen parallele Rollen angeordnet sind, die um ihre jeweiligen Achsen gedreht werden. Der Spalt zwischen den zwei Rollen ist derart bemessen, dass er einen größeren Abstand als der Durchmesser des Körpers von in den Fülltrichter gegebenen Vorformlingen hat, jedoch einen kleineren Abstand als der Durchmesser des Halsrings bzw. des Neckrings von in den Fülltrichter gegebenen Vorformlingen hat. Da der Durchmesser des Körpers von Vorformlingen kleiner als der Durchmesser des Halsrings von Vorformlingen ist, bleiben Vorformlinge, die mit ihrem Körper voran durch den Spalt fallen, mit ihrem Halsring an den 2 Rollen hängen. Vorformlinge, die beispielsweise vollständig auf den Rollen liegen bleiben, werden mit Hilfe eines über und quer zu den Achsen der zwei Rollen angeordneten Ausstoßrads von den Rollen gestoßen, so dass die zwei Rollen nur Vorformlinge transportieren, welche in einer Richtung nebeneinander aufgereiht sind.

Die JP 2005219906 beschreibt eine Vorrichtung zum Ausrichten von Stückgütern. Dabei sind zwei Rollen vorgesehen, zwischen denen die Stückgüter gefördert werden können sowie auch eine Detektoreinrichtung, die feststellt, ob auf einem Zuförderungsband Stückgüter angefördert werden.

Mit einer solchen Rollensortiereinrichtung können jedoch verklemmte Vorformlinge nicht von den zwei Rollen entfernt werden.

Die FR 2 864 050 beschreibt eine gattungsgemäße Einrichtung.

Es ist Aufgabe der Erfindung, eine verbesserte Rollensortiereinrichtung und ein verbessertes Sortierverfahren zum Sortieren von Vorformlingen sowie eine Transportvorrichtung mit einer solchen Rollensortiereinrichtung zur Verfügung zu stellen, welche kostengünstig auch verklemmte Vorformlinge von den zwei Rollen der Rollensortiereinrichtung entfernen können.

Die Aufgabe wird durch eine Rollensortiereinrichtung nach Patentanspruch 1 gelöst. Die Rollensortiereinrichtung dient zum Sortieren von Vorformlingen und hat eine erste Rolle, welche um ihre Rollenachse drehbar antreibbar ist, eine zweite Rolle, welche um ihre Rollenachse - insbesondere gegenläufig zu der Drehung der ersten Rolle - drehbar antreibbar ist und derart

beabstandet von der ersten Rolle angeordnet ist, dass ihre Rollenachsen im Wesentlichen parallel zueinander angeordnet sind, eine Erfassungseinrichtung zur Erfassung verklemmter und/oder fehlerhafter Vorformlinge an der ersten und zweiten Rolle, und ein Rollenanordnungsänderungselement zur Änderung der Anordnung der ersten und zweiten Rolle zueinander, wenn die Erfassungseinrichtung verklemmte Vorformlinge erfasst.

Vorteilhafte weitere Ausgestaltungen der Transporteinrichtung sind in den abhängigen Patentansprüchen angegeben.

Unter einer Änderung der Anordnung der ersten und zweiten Rolle zueinander wird insbesondere verstanden, dass wenigstens ein Abschnitt einer der beiden Rollen in seiner Position gegenüber der anderen Rolle verändert wird. Dabei ist ein Verschieben in Richtung der Drehachse der Rollen möglich, es wäre jedoch auch möglich, dass ein Abstand wenigstens eines Abschnitts einer Rolle zu der anderen Rolle verändert wird.

Vorzugsweise ist das Rollenanordnungsänderungselement zum Versetzen der ersten und zweiten Rolle gegeneinander um einen vorbestimmten Abstand ausgestaltet.

Bei der Verarbeitung von verschiedenen Vorformlingen mit unterschiedlichen Durchmessern oder Neckringen sind grundlegende Abstandsänderungen zur Anpassung an die Geometrie der Vorformlinge möglich, dazu kann eine vorzugsweise automatische Einstellung der zweiten Rolle und/oder auch der ersten Rolle erfolgen. Der Begriff ortsfeste Rolle bezieht sich somit nur auf die Position während des Betriebs, nicht aber auf eine generelle Voreinstellung des Rollenabstandes.

Es ist vorteilhaft, wenn das Rollenanordnungsänderungselement zum Schwenken eines Teils der ersten Rolle weg von der zweiten Rolle ausgestaltet ist. Hierbei ist die erste Rolle mittels einer Gelenkwelle in zwei Teile unterteilt, wobei der eine Teil der ersten Rolle mittels der Gelenkwelle in die Drehung um ihre Rollenachse antreibbar ist, und der andere Teil der ersten Rolle an der Gelenkwelle aus der Richtung ihrer Rollenachse und von der zweiten Rolle weg schwenkbar ist.

Es ist auch möglich, dass die erste Rolle das Rollenanordnungsänderungselement als eine Einheit aufweist, und diese Einheit ein von der Drehung der ersten Rolle entkoppeltes angefastes Element umfasst.

Hierbei kann die Einheit derart ausgestaltet sein, dass sich durch eine Drehbewegung um einen vorbestimmten Winkel um die Rollenachse der ersten Rolle den Abstand zwischen der ersten und zweiten Rolle vergrößert, um schlecht sortierte Vorformlinge zwischen der ersten und zweiten Rolle auszuschleusen.

Das Rollenanordnungsänderungselement kann motorisch oder pneumatisch antreibbar sein, wobei vorzugsweise die motorische Betätigung mittels Zahnstange oder Zahnriemen erfolgt.

Es ist vorzuziehen, dass das Rollenanordnungsänderungselement in Bezug auf die Transportrichtung der Vorformlinge in der Rollensortiereinrichtung am Ende der Rollensortiereinrichtung angeordnet ist.

Vorteilhaft kann dass Rollenanordnungsänderungselement entlang von Linearführungen bzw. mittels Linearführungen bewegt werden. Dabei verlaufen die Linearführungen beispielsweise parallel oder senkrecht zur Drehachse der ersten Rolle.

Die Aufgabe wird zudem durch eine Transportvorrichtung zum Transport von Vorformlingen gelöst. Die Transportvorrichtung umfasst eine Rollensortiereinrichtung, wie zuvor beschrieben, eine Führungsschienenanordnung, die stromabwärts der Rollensortiereinrichtung angeordnet ist und zwei sich beabstandet gegenüberliegende Führungsschienen aufweist. Hierbei sind die zwei Führungsschienen derart angeordnet, dass sie die von der Rollensortiereinrichtung abgegebenen Vorformlinge zwischen die Führungsschienen aufnehmen können, und die Vorformlinge vorzugsweise in eine andere Richtung neigen, als sie durch die Rollensortiereinrichtung ausgerichtet sind.

Die Aufgabe wird zudem durch ein Sortierverfahren nach Patentanspruch 10 gelöst, welches zum Sortieren von Vorformlingen mit einer Rollensortiereinrichtung dient, die eine erste Rolle, welche um ihre Rollenachse drehbar antreibbar ist, und eine zweite Rolle umfasst, welche um ihre Rollenachse - insebesondere gegenläufig zu der Drehung der ersten Rolle - drehbar antreibbar ist und derart beabstandet von der ersten Rolle angeordnet ist, dass ihre Rollenachsen im Wesentlichen parallel zueinander angeordnet sind. Das Sortierverfahren umfasst die Schritte: Erfassen verklemmter und/oder fehlerhafter Vorformlinge an der ersten und zweiten Rolle, und Ändern der Anordnung der ersten oder zweiten Rolle oder wenigstens von Abschnitten dieser Rollen zueinander, wenn die Erfassungseinrichtung verklemmte Vorformlinge erfasst.

Nachfolgend wird die Erfindung unter Bezugnahme auf die beiliegende Zeichnung und anhand von Ausführungsbeispielen näher beschrieben. Es zeigt:
Fig. 1 eine schematische Draufsicht auf eine Transportvorrichtung mit einer Rollensortiereinrichtung gemäß einem ersten Ausführungsbeispiel der vorliegenden Erfindung;
Fig. 2 eine Schnittansicht der Rollensortiereinrichtung entlang eines Schnitts A-A' in Fig. 1;
Fig. 3 eine Draufsicht auf einen Teil der Transportvorrichtung an dem Übergang zwischen ihrer Rollensortiereinrichtung gemäß dem ersten Ausführungsbeispiel der vorliegenden Erfindung und ihrer Führungsschienenanordnung;
Fig. 4 eine weitere Draufsicht auf den in Fig. 3 gezeigten Teil der Transportvorrichtung;
Fig. 5 eine Draufsicht auf einen Teil einer Transportvorrichtung an dem Übergang zwischen ihrer Rollensortiereinrichtung gemäß einem zweiten Ausführungsbeispiel der vorliegenden Erfindung und ihrer Führungsschienenanordnung;
Fig. 6 eine weitere Draufsicht auf den in Fig. 5 gezeigten Teil der Transportvorrichtung;
Fig. 7a-b zwei Draufsichten auf einen Teil einer Transportvorrichtung an dem Übergang zwischen ihrer Rollensortiereinrichtung gemäß einem dritten Ausführungsbeispiel der vorliegenden Erfindung;
Fig. 8a bis 8c drei weitere Ausführungsformen stark schematisiert; und
Fig. 9 eine weitere Ausführungsform eines erfindungsgemäßen Rollensortierers.

### (Erstes Ausführungsbeispiel)

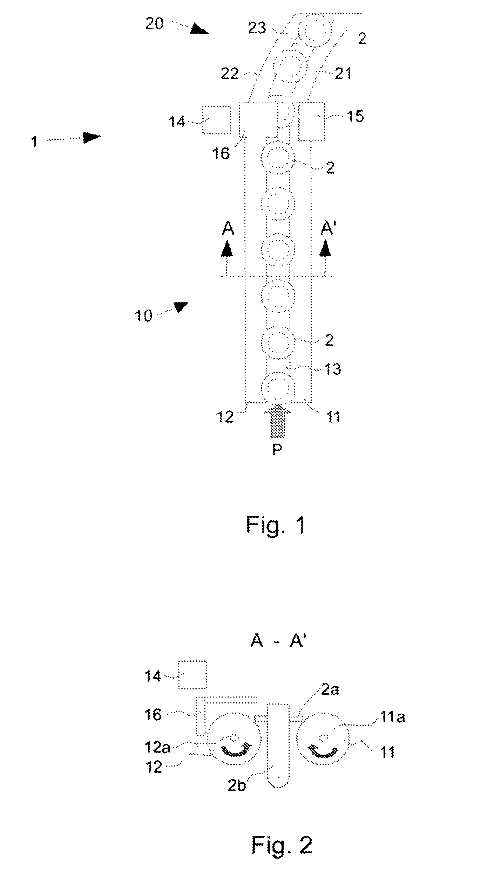

In Fig. 1 ist schematisch eine Transportvorrichtung 1 zum Transport von Vorformlingen 2 dargestellt. Die Transportvorrichtung 1 umfasst eine Rollensortiereinrichtung 10 und eine Führungsschienenanordnung 20.

Mit Hilfe der Rollensortiereinrichtung 10 werden die Vorformlinge 2, die der Transporteinrichtung 1 zunächst völlig beliebig zueinander orientiert zugeführt werden, in einer Reihe hintereinander und in einer Orientierung zueinander ausgerichtet. Danach werden die Vorformlinge 2 an die Führungsschienenanordnung 20 übergeben, welche die Vorformlinge 2 in eine andere Richtung neigt, als sie durch die Rollensortiereinrichtung 10 ausgerichtet sind. Hierdurch ist die Anordnung der Rollensortiereinrichtung 10 unabhängig von einer Anordnung einer Behältnisbehandlungsanlage, wie beispielsweise einer Heizeinrichtung zum Erwärmen der Vorformlinge 2, welcher die Transportvorrichtung 1 die Vorformlinge 2 zuführen soll.

Die Rollensortiereinrichtung 10 umfasst zwei Rollen 11, 12, die nachfolgend auch als erste und zweite Rolle 11, 12 bezeichnet sind, und die derart nebeneinander angeordnet sind, dass sie einen Spalt 13 zwischen sich bilden. Zudem umfasst die Rollensortiereinrichtung 10 eine Erfassungseinrichtung 14, eine Rollenanordnungsänderungselement 15 und vorzugsweise eine Auswurfeinrichtung 16.

Die erste und zweite Rolle 11, 12 haben in etwa die gleichen Abmessungen, das heißt sie sind in etwa gleich lang (siehe Fig. 1) und haben in etwa den gleichen Durchmesser (siehe Fig. 2). Außerdem liegen sich die Rollen 11, 12 mit einem vorbestimmten Abstand gegenüber. Das heißt, die Rollen 11, 12 bilden einen Spalt 13, in welchen die Vorformlinge 2 aufgenommen werden können, indem sie, wie in Fig. 2 gezeigt, mit ihrem Haltering 2a im Bereich ihres Halses oben auf den Rollen 11, 12 aufliegen, wenn der Körper 2b der Vorformlinge 2 zwischen den Rollen 11, 12 hindurchragt. Daher hat der Spalt 13 eine Breite, die kleiner als der Außendurchmesser des Halterings 2a des Vorformlings 2 jedoch länger als der Außendurchmesser des Körpers 2b des Vorformlings 2 ist. Somit können die Vorformlinge 2 an ihrem Haltering 2a von den Rollen 11, 12 gehalten werden, und pendeln mit ihrem Körper 2b zwischen den Rollen 11, 12.

Die Vorformlinge 2 werden durch gegenläufiges Drehen der Rollen 11, 12 um ihre jeweiligen Rollenachsen 11a, 12a, wie in Fig. 2 durch kleine Pfeile angegeben, ausgerichtet und in der in Fig. 1 mit einem dicken grauen Blockpfeil P angegebenen Transportrichtung transportiert. Das gegenläufige Drehen der Rollen 11, 12 hat zum einen die Funktion, dass ein Einziehen der Vorformlinge 2 in die Rollensortiereinrichtung 10 vermieden wird, und zum anderen die Funktion, dass die Vorformlinge 2 ausgerichtet werden. Zudem hat die Rollensortiereinrichtung 10 die Aufgabe, verkeilte Vorformlinge 2 oder nicht den Qualitätsansprüchen genügende Vorformlinge 2 auszuschleusen und somit auszusortieren. Zu diesem Zwecke umfasst die Rollensortiereinrichtung 10 die Erfassungseinrichtung 14, welche einen durch verkeilte bzw. verklemmte Vorformlinge 2 verursachten Stau in der Rollensortiereinrichtung 10 und/oder die Qualität der Vorformlinge 2, wie beispielsweise Wandstärke, Form usw., erfassen kann. Wird von der Erfassungseinrichtung 15 ein fehlerhafter und/oder ein falsch positionierter Vorformling 2 und/oder ein Stau der Vorformlinge 2 erfasst, sendet sie ein Signal, welches von dem Rollenanordnungsänderungselement 15 in eine Änderung der Anordnung der ersten und zweiten Rolle 11, 12 zueinander umgesetzt wird.

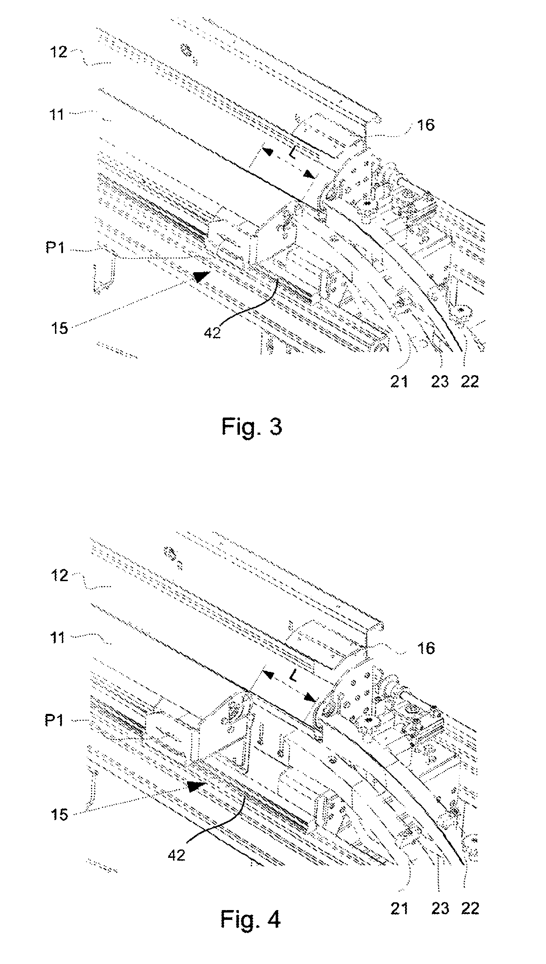

Das Rollenanordnungsänderungselement 15 gemäß dem ersten Ausführungsbeispiel wird durch eine Antriebseinrichtung realisiert, welche beispielsweise die erste Rolle 11 von der in Fig. 3 gezeigten Position in die in Fig. 4 gezeigte Position gegenüber der zweiten, vorzugsweise ortsfesten Rolle 12 versetzt. Dies ist durch den zweiseitigen Pfeil P1 an der Rolle 11 in Fig. 3 und Fig. 4 veranschaulicht. Das heißt, in Fig. 4 ist die erste Rolle 11 gegenüber der zweiten Rolle 12 nach hinten gezogen. Genauer gesagt, zieht das Rollenanordnungsänderungselement 15 bzw. die Antriebseinrichtung die gesamte erste Rolle 11, von der in Fig. 3 gezeigten Ausgangsposition, linear in Bezug auf ihre Rollenachse 11 a nach hinten, so dass die sich erste und zweite Rolle 11, 12 zwar weiterhin im Wesentlichen parallel und mit demselben Abstand, Spalt 13, wie zuvor einander gegenüberliegen, jedoch die erste und zweite Rolle 11, 12 nun versetzt zueinander angeordnet sind. Vorzugsweise wird die Bewegung entlang eingesetzter Linearführungen (42) ausgeführt.

Anders ausgedrückt, die Vorformlinge 2 sind zwischen der ersten und zweiten Rolle 11, 12 in der in Fig. 1 und 3 durch den dicken grauen Blockpfeil P angegebenen vorbestimmten Transportrichtung transportierbar. Hierbei ist das Rollenanordnungsänderungselement 15 zum Zurückziehen der ersten oder zweiten Rolle 11, 12 entgegen der vorbestimmten Transportrichtung ausgestaltet, um eine vorbestimmte Lücke L in der Rollensortiereinrichtung 10 zu erzeugen. Durch die erzeugte Lücke wird somit der Spalt 13 zwischen den Rollen vergrößert und die entsprechenden Vorformlinge 2 werden vorzugsweise mittels Schwerkraft ausgeschleust.

Das Rollenanordnungsänderungselement 15 kann als Antriebseinrichtung ausgestaltet sein, welche beispielsweise ein motorischer oder pneumatischer Antrieb ist. Motorisch kann also das Rollenanordnungsänderungselement 15 insbesondere über eine Zahnstange oder einen Zahnriemen angetrieben sein.

Durch die vorbestimmte Lücke L, die durch das Versetzen der ersten Rolle 11 zu der zweiten Rolle 12 in der Rollensortiereinrichtung 10 entsteht, kann ein Vorformling 2, insbesondere mit Hilfe der in Fig. 1, Fig. 3 und Fig. 4 dargestellten Auswurfeinrichtung 16 aus der Rollensortiereinrichtung 10 ausgeschleust werden.

Sobald die verklemmten und oder qualitativ schlechten Vorformlinge 2 aus dem Spalt 13 zwischen der ersten und zweiten Rolle 11, 12 ausgeschleust sind, kann die erste Rolle 11 wieder in die in Fig. 3 gezeigte Ausgangsstellung zurückgesetzt oder zurückgeschoben werden.

Somit kann die Rollensortiereinrichtung 10 Vorformlinge 2 nicht nur in einer vorbestimmten Richtung ausrichten und damit alle in einer festgelegten Richtung sortieren, sondern auch in Bezug auf Qualität sortieren. Zudem kann ein Stau in der Rollensortiereinrichtung 10 wirksam beseitigt werden, der beispielsweise durch an den Rollen 11, 12 verklemmte bzw. verkeilte Vorformlinge 2 verursacht wird.

Wie aus Fig. 3 und Fig. 4 ersichtlich, ist das Rollenanordnungsänderungselement 15 am Ende der Rollensortiereinrichtung 10 angeordnet, das heißt, bevor sich an die Rollensortiereinrichtung 10 die Führungsschienenanordnung 20 stromabwärts anschließt. "Stromabwärts" bezieht sich hier auf den Strom der Vorformlinge 2 in der vorbestimmten Transportrichtung P in der Rollensortiereinrichtung 10. Die vorbestimmte Transportrichtung P wird auch in der Führungsschienenanordnung 20 beibehalten.

Durch die Anordnung des Rollenanordnungsänderungselements 15 am Ende der Rollensortiereinrichtung 10 kann das Versetzen oder Zurückziehen der ersten Rolle 11 gegenüber der zweiten Rolle 2 einfach realisiert werden. Hiermit braucht die vorbestimmte Lücke L nur so lang sein, wie erforderlich ist, um die ausschleusenden bzw. auszusortierenden Vorformlinge 2 ausschleusen zu können. Das heißt, das Rollenanordnungsänderungselement 15 kann derart ausgestaltet sein, dass die Länge der Lücke L variabel ist, bzw. die erste Rolle 11 gegenüber der zweiten Rolle 12 je nach von der Erfassungseinrichtung 14 erfassten Zustand und daraus ermitteltem vorgegebenen Bedarf variabel versetzt werden kann.

Nach Durchlauf durch die Rollensortiereinrichtung 10 werden die Vorformlinge 2 an die Führungsschienenanordnung 20 übergeben. Wie in Fig. 3 und Fig. 4 gezeigt, hat die Führungsschienenanordnung 20 zwei Führungsschienen 21, 22, die einen quadratischen Querschnitt haben und sich wie die Rollen 11, 12 beabstandet gegenüberliegen. Das heißt, die beiden Führungsschienen 21, 22 bilden zwischen sich einen derartigen Spalt 23, dass die Halteringe 2a der Vorformlinge 2 oben auf den Führungsschienen 21, 22 ― insbesondere unter Wirkung der Schwerkraft - entlanggleiten und ihr Körper 2b kann in dem Spalt 23 zwischen den Führungsschienen 21, 22 pendeln kann. Der Spalt 23 der Führungsschienenanordnung 20 ist vorzugsweise in etwa so breit wie der Spalt 13 der Rollensortiereinrichtung 10.

Die Führungsschienen 21, 22 sind gegenüber der Ebene, in der die Rollen 11, 12 der Rollensortiereinrichtung 10 angeordnet sind, geneigt bzw. aus ihr weg gebogen. Auf diese Weise können die zwei Führungsschienen 21, 22 die Vorformlinge 2 in eine andere Richtung neigen, als sie durch die Rollensortiereinrichtung 10 ausgerichtet sind. Da die Vorformlinge 2 bereits in der Rollensortiereinrichtung 10 gemäß diesem Ausführungsbeispiel vollständig ausgerichtet und sortiert sind, kann eine weitere Sortiereinrichtung in der Führungsschienenanordnung 20 entfallen.

### (Zweites Ausführungsbeispiel)

Die Rollensortiereinrichtung 10 gemäß dem zweiten Ausführungsbeispiel hat in weiten Bereichen die gleichen Teile, wie in Fig. 1 und Fig. 2 gezeigt. Daher sind gleiche und gleichbedeutende Teile in beiden Ausführungsbeispielen mit den gleichen Bezugszeichen bezeichnet.

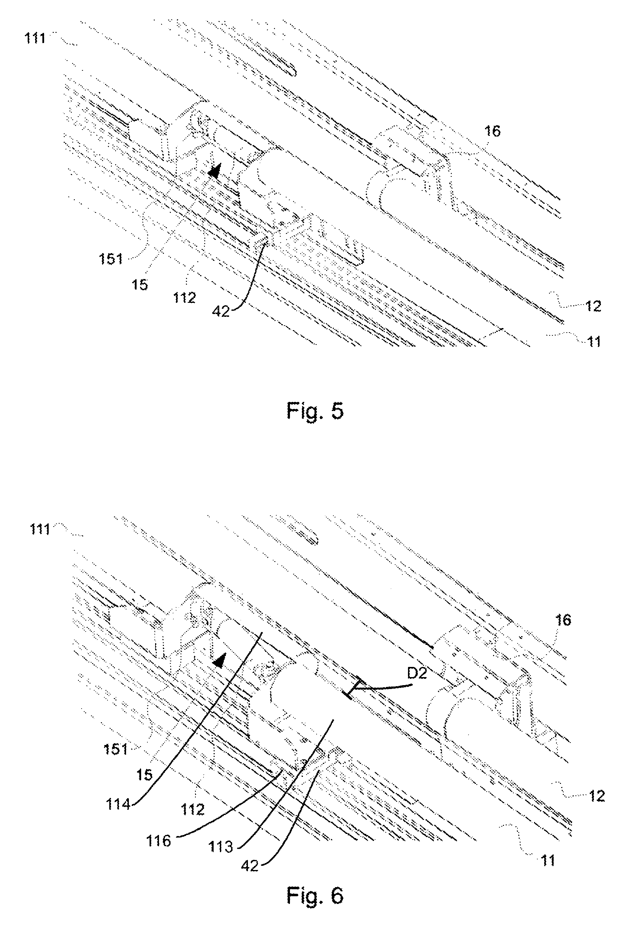

Der Unterschied zwischen dem ersten und zweiten Ausführungsbeispiel besteht darin, dass das Rollenänderungselement 15 bei diesem Ausführungsbeispiel eine Gelenkwelle 151 ist bzw. aufweist welche ein Teil der ersten Rolle 11 von der zweiten Rolle 12 weg schwenkt. Das heißt die gesamte Rolle 11 kann nicht insgesamt versetzt werden, sondern nur ein Teil der Rolle 11. Zudem kann bei diesem Ausführungsbeispiel das Rollenänderungselement 15 auch mitten in der ersten Rolle 11 eingebaut sein, wie in Fig. 5 und Fig. 6 gezeigt, auch wenn ein Einbau am Ende der ersten Rolle 11, analog zu dem ersten Ausführungsbeispiel, vorteilhaft ist, um beispielsweise die Anzahl der Teile der Rollensortiereinrichtung 10 zu minimieren. Somit ist im Folgenden nur dieser Unterschied beschrieben. Das Bezugszeichen 112 kennzeichnet einen Gelenkwellenabschnitt.

Fig. 5 und Fig. 6 zeigen das Rollenanordnungsänderungselement 15 gemäß diesem Ausführungsbeispiel in der Ausführung als Gelenkwelle 151. Die Gelenkwelle 151 unterteilt die erste Rolle 11 in einen ersten Teil 111 und einen zweiten Teil 113, wenn die Gelenkwelle 151 und der zweite Teil 113 am Ende der Rollensortiereinrichtung 10 vorgesehen sind. Ansonsten ist noch ein weiteres Teil der Rolle 11 vorhanden, wie aus Fig. 5 und Fig. 6 ersichtlich. Damit ist der zweite Teil 113 der Rolle 11 mit der Drehung des ersten Teils 111 bzw. der ersten Rolle 11 gekoppelt. Der zweite Teil 113 der ersten Rolle 11 kann durch die Gelenkwelle 151 von der zweiten Rolle 12 weg geschwenkt werden.

Das Bezugszeichen 112 kennzeichnet einen Gelenkwellenabschnitt der Gelenkwelle, der zum Ausfahren des zweiten Teils 113 der Rolle 11 schräg gestellt wird, jedoch Drehmomente überträgt. Das Bezugszeichen 116 bezieht sich auf eine Linearführungseinheit, mit der der zweite Teil 113 der Rolle 11 senkrecht zu den Drehachsen der Rolle verschiebbar ist

Anders ausgedrückt, der erste Teil 111 der ersten Rolle 11 ist mittels der Gelenkwelle 151 in eine Drehung um ihre Rollenachse 11a antreibbar, während der zweite Teil 113 der ersten Rolle 11 auch an der Gelenkwelle 151 verschiebbar ist. Dadurch entsteht ein vergrößerter Abstand D2 in der Rollensortiereinrichtung 10 zwischen dem zweiten Teil 113 der ersten Rolle 11 und der weiteren Rolle 12, so dass auch auf diese Weise verklemmte und oder qualitativ schlechte Vorformlinge 2 aus dem Spalt 13 zwischen der ersten und zweiten Rolle 11, 12 ausgeschleust werden können.

Das Bezugszeichen 114 bezieht sich auf ein Führungselement, entlang dessen die Vorformlinge in dem Bereich, in dem die Gelenkwelle 151 angeordnet ist, geführt werden. Dieses Führungselement 114 ist dabei vorteilhaft vorteilhaft stationär angeordnet d. h. die Vorformlinge werden hier zwischen einer sich drehenden Rolle 12 und dem Führungselement 114 verschoben. Vorteilhaft dient dieses Führungselement 114 zum Abdecken der Gelenkwelle 151 bzw. hier dem Rollenänderungselement 15 in seiner Gesamtheit.

Vorteilhaft ist eine Außenumfang des Führungselements 114 an einen Aussenumfang der Rolle 11 angepasst und so dass besonders vorteilhaft das Führungselement eine gekrümmte Oberfläche aufweist.

Sobald die verklemmten und oder qualitativ schlechten Vorformlinge 2 aus dem Spalt 13 zwischen der ersten und zweiten Rolle 11, 12 ausgeschleust sind, kann der von der erste Rolle 11 abgeschwenkte zweite Teil 113 wieder in die in Fig. 5 gezeigte Ausgangsstellung zurückgeschwenkt werden.

Das mittels der Gelenkwelle 151 ausschwenkbare zweite Teil 113 der ersten Rolle 11 kann motorisch oder pneumatisch mittels einer Antriebseinrichtung angetrieben sein. Motorisch kann das mittels der Gelenkwelle 151 ausschwenkbare zweite Teil 113 der ersten Rolle 11 insbesondere über eine Zahnstange oder einen Zahnriemen angetrieben sein.

### (Drittes Ausführungsbeispiel)

Die Rollensortiereinrichtung 10 gemäß dem dritten Ausführungsbeispiel hat im Wesentlichen die gleichen Teile, wie bei dem ersten Ausführungsbeispiel gezeigt. Daher sind gleiche und gleichbedeutende Teile in beiden Ausführungsbeispielen mit den gleichen Bezugszeichen bezeichnet.

Der Unterschied zwischen dem ersten und dritten Ausführungsbeispiel besteht darin, dass das Rollenanordnungsänderungselement 15 bei diesem Ausführungsbeispiel eine Einheit 152 der ersten Rolle 11 ist, welche nur von gut sortierten Vorformlingen 2 passiert werden kann, wohingegen schlecht sortierte Vorformlinge 2 von der Einheit 152 ausgeschleust werden. Das heißt, wie im zweiten Ausführungsbeispiel, ist auch im dritten Ausführungsbeispiel die erste Rolle 11 nicht vollständig gegenüber der zweiten Rolle 12 versetzbar, sondern es ist nur ein Teil der ersten Rolle 11 versetzbar bzw. änderbar. Somit ist im Folgenden nur dieser Unterschied beschrieben.

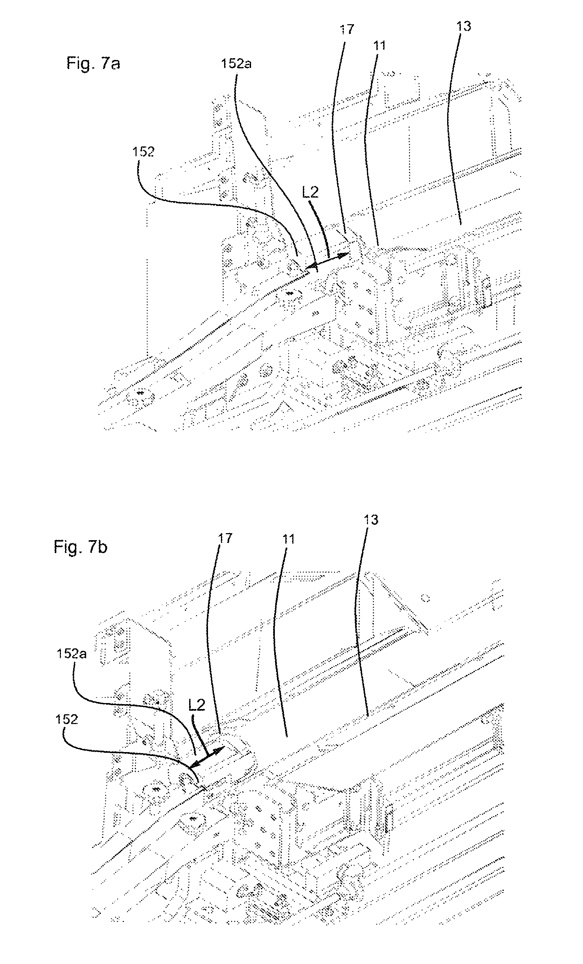

Gemäß Fig. 7a und 7b ist das Ende der ersten Rolle 11 in der vorbestimmten Transportrichtung P der Vorformlinge 2 in der Rollensortiereinrichtung 10 an einer Seite auf einer bestimmten Länge L2 angefast. Der angefaste Teil der ersten Rolle 11 gehört zu einer Einheit 152, welche im Wesentlichen den gleichen Durchmesser hat, wie die erste Rolle 11 und an die Rolle 11 anschließt. Die Einheit 152 ist von der Drehung der ersten Rolle 11 entkoppelt. Anders gesagt, die erste Rolle 11 und die Einheit 152 sind unabhängig voneinander drehbar. Dies kann durch die in Fig. 7 gezeigte Entkopplungseinrichtung 17 geschehen.

Im Normalbetrieb (Fig. 7b) ist der angefaste Bereich 152a der Einheit 152 von dem Spalt 13 zwischen den Rollen abgewandt. Falls schlecht sortierte d. h. nicht von der Rollensortiereinrichtung 10 auf die beabsichtigte Weise ausgerichtete und damit sortierte Vorformlinge erkannt werden, wird die Einheit 152 so gedreht, dass der angefaste Bereich 152a der Rolle 12 gegenüberliegt (Fig. 7a). Auf diese Weise wird auch so der Spalt 13 zwischen den beiden Rollen in dem Bereich der angefasten Stelle 152a erhöht, so dass die Vorformlinge in diesem Bereich nach unten durchfallen können.

Die Einheit 152 ist in Fig. 7a und 7b so angeordnet, dass der Spalt 13 zwischen der ersten und zweiten Rolle 11, 12 im Bereich der Einheit 152 abgesehen von dem Bereich der Anfasung genauso breit ist, wie in den anderen Bereichen zwischen den Rollen 11, 12. Erfasst die Erfassungseinrichtung 14 einen fehlerhaften Zustand, bzw. einen falsch orientierten Vorformling, gibt sie ein Signal aus. In Folge dessen wird, wie erwähnt, die Einheit 152 von einer Antriebseinrichtung um einen vorbestimmten Winkel, beispielsweise 90 °, im Uhrzeigersinn in Fig. 7b gedreht, so dass die von der angefasten Stelle 152a gebildete Fläche der ersten Rolle 11 in etwa senkrecht zu der Breite des Spalts 13 steht (Fig. 7a). Auf diese Weise wird der Spalt 13 vergrößert bzw. verbreitert, so dass die schlecht sortierten Vorformlinge 2 aus dem Spalt 13 zwischen der ersten und zweiten Rolle 11, 12 ausgeschleust werden können.

Sobald die schlecht sortierten Vorformlinge 2 aus dem Spalt 13 zwischen der ersten und zweiten Rolle 11, 12 ausgeschleust sind, kann die Einheit 152 wieder in die in Fig. 7b gezeigte Ausgangsstellung zurückgedreht werden.

Die Antriebseinrichtung für die Einheit 152 kann ein separater Motor sein oder auch ein Riemen. Alternativ kann die Antriebseinrichtung den Antrieb auch pneumatisch vornehmen.

### (weitere Ausführungsbeispiele)

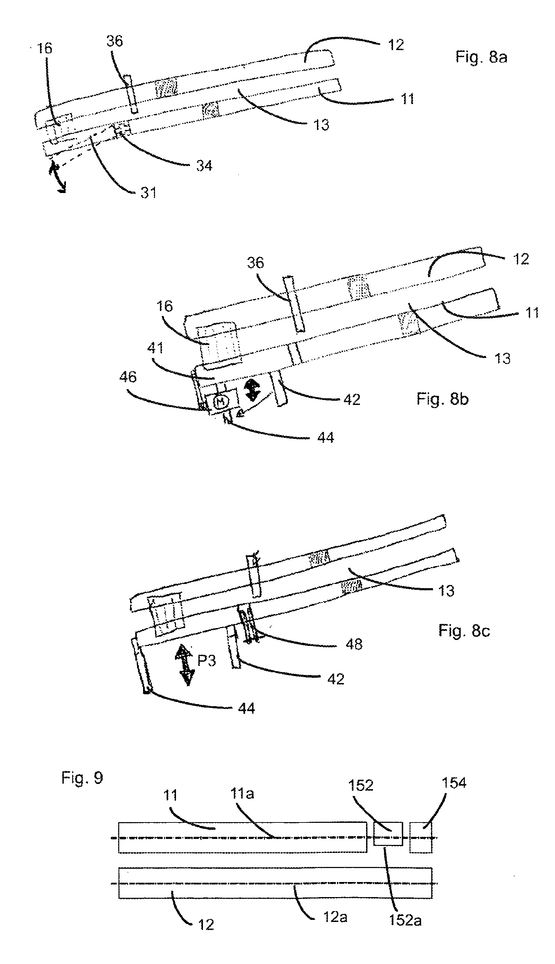

Die Fig. 8a - 8c zeigen stark schematisiert drei weitere Ausführungsformen der vorliegenden Erfindung. Der in Fig. 8a gezeigten Darstellung ist die Rolle 11 unterteilt und weist einen Teil 31 auf, der entlang des Pfeils P2 schwenkbar ist. Zu diesem Zweck ist eine Gelenkverbindung 34 vorgesehen mit der es sich auch wiederum um eine Gelenkwelle handeln kann. Damit dreht sich der Rollenteil 31 zumindest in einem eingeklappten Zustand d. h. im Normalbetrieb mit. Das Bezugszeichen 36 kennzeichnet eine Stoppeinrichtung, welche falsch liegende Vorformlinge ausrichtet.

Bei der in Fig. 8b gezeigten Ausführungsform ist ebenfalls ein zweiter Rollenteil 41 vorgesehen, der jedoch hier in seiner Gesamtheit entlang des Pfeils P d. h. senkrecht zu der Transportrichtung der Vorformlinge mit Linearführungen 42 und 44 herausschiebbar ist. Auf der Linearführung 44 ist weiterhin ein Motor 46 vorgesehen, der diesen Rollenabschnitt 41 im Normalbetrieb ebenfalls dreht. Daher ist hier keine Kopplung zwischen dem Rollenteil 41 und der übrigen Rolle 11 vorgesehen, sondern die Drehbewegung des Rollenteils 41 wird durch den ebenfalls auf der Linearführung 44 vorgesehenen Motor 46 bewirkt.

Fig. 8c zeigt eine weitere Ausführungsform, bei der ebenfalls der Rollenteil 41 mittels zwei Linearführungen 42 und 44 entlang des Pfeils P3 herausschiebbar ist, um so ebenfalls die Größe des Spalts 13 zu vergrößern und Vorformlinge auszusortieren. Allerdings ist hier die Drehbewegung des Rollenteils 41 an diejenige der Rolle 11 mittels einer Riemenverbindung 48 gekoppelt.

Fig. 9 zeigt grob schematisch eine weitere Ausführungsform einer Rollensortiereinrichtung. Diese Ausführungsform ähnelt der in den Fig. 7a und 7b gezeigten Ausführungsform und weist ebenfalls eine um die Drehachse 11 a drehbare Einheit 152 mit einer angefassten Stelle 152a auf. Diese drehbare Einheit 152 ist von der Drehung der ersten Rolle11 entkoppelt. Bei der in Fig. 9 gezeigten Situation ist diese drehbare Einheit so gedreht, dass der Spalt zwischen den Rollen vergrößert wird und die Kunststoffvorformlinge herausfallen können. An diese drehbare Einheit 152 schließt sich ein weiteres zylindrisches Wellenstück 154 an, welches sich vorteilhaft ebenfalls um die Drehachse 11a dreht und dessen Drehung besonders bevorzugt mit der Drehung der Rolle 11 gekoppelt ist. Durch dieses abschließende zylindrische Wellenstück 154 kann der Gefahr eines Verkantens der Kunststoffvorformlinge im Auslauf des Rollensortierers entgegengewirkt werden, insbesondere bei nicht ganz exakter Ausrichtung der drehbaren Einheit 152.

### (Allgemeines)

Alle zuvor beschriebenen Ausgestaltungen der Rollensortiereinrichtung 10, der Transportvorrichtung 1 und des zuvor beschriebenen Sortierverfahrens können einzeln oder in allen möglichen Kombinationen Verwendung finden. Hierbei sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Führungsschienen 21, 22 können auch jeweils die Form eines auf dem Kopf stehenden Ls haben, wobei sich die vertikalen Schenkel des Ls der beiden Führungsschienen 21, 22 jeweils gegenüberliegen. Dadurch bilden die beiden Führungsschienen 21, 22 insgesamt ein T, dessen vertikaler Schenkel durch die vertikalen Schenkel des Ls der Führungsschienen 21, 22 und einen zwischen diesen vorhandenen Spalt 23 gebildet wird. Es sind auch andere Formen der Führungsschienen denkbar, solange sie einen Spalt 23 zwischen sich bilden, der zum Transport von Vorformlingen 2 geeignet ist, wie zuvor beschrieben.

Zur Verbesserung des Ausschleusens von Vorformlingen aus der Rollensortiereinrichtung 10 kann zudem eine nicht dargestellte Stoppeinrichtung vor der Rollenanordnungsänderungseinrichtung 15 vorhanden sein, um nach dem(den) auszuschleusenden Vorformling(en) 2 nachfolgende Vorformlinge 2 für die Zeit des Ausschleusens aus der Rollensortiereinrichtung 10 zu stoppen.

### Bezugszeichenliste

- 1: Transportvorrichtung
- 2: Vorformling
- 2a: Haltering
- 2b: Körper
- 10: Rollensortiereinrichtung
- 11: erste Rolle
- 11a: Rollenachse
- 12: zweite Rolle
- 12a: Rollenachse
- 13: Spalt
- 14: Erfassungseinrichtung

- 15: Rollenanordnungsänderungseinrichtung
- 16: Auswurfeinrichtung
- 17: Entkopplungseinrichtung
- 20: Führungsschienenanordnung
- 21: erste Führungsschiene
- 22: zweite Führungsschiene
- 23: Spalt
- 31, 41: Rollenteil
- 34: Gelenkverbindung
- 36: Stoppeinrichtung
- 42, 44: Linearführungen
- 46: Motor
- 48: Riemenverbindung
- 111: erster Teil der Rolle 11
- 112: Gelenkwellenabschnitt
- 113: zweiter Teil der Rolle 11
- 114: Führungselement
- 116: Linearführungseinheit
- 151: Gelenkwelle
- 152: Einheit
- 152a: angefaste Stelle der Einheit 152
- 154: Wellenstück

- L, D2: Lücke
- L2: Länge
- P: Transportrichtung
- P1: Bewegungsrichtung der Rollenanordnungsänderungseinrichtung 15
- P3: Pfeil

## Patentansprüche

1. Rollensortiereinrichtung (10) zum Sortieren von Vorformlingen (2), mit einer ersten Rolle (11), welche um ihre Rollenachse (11a) drehbar antreibbar ist, einer zweiten Rolle (12), welche um ihre Rollenachse (12a) gegenläufig zu der Drehung der ersten Rolle (11) drehbar antreibbar ist und derart beabstandet von der ersten Rolle (11) angeordnet ist, dass ihre Rollenachsen (11a, 12a) im Wesentlichen parallel zueinander angeordnet sind,
einer Erfassungseinrichtung (14) zur Erfassung verklemmter und/oder fehlerhafter Vorformlinge (2) an der ersten und zweiten Rolle (11, 12), **dadurch gekennzeichnet dass** die Einrichtung ein Rollenanordnungsänderungselement (15) aufweist, zur Änderung der Anordnung der ersten und zweiten Rolle (11, 12) zueinander, wenn die Erfassungseinrichtung (14) verklemmte Vorformlinge erfasst.

2. Rollensortiereinrichtung nach Anspruch 1, wobei das Rollenanordnungsänderungselement (15) zum Versetzen der ersten und zweiten Rolle (11, 12) gegeneinander um einen vorbestimmten Abstand (L) ausgestaltet ist.

3. Rollensortiereinrichtung nach Anspruch 1, wobei das Rollenanordnungsänderungselement (15) zum Schwenken eines Teils (111) der ersten Rolle (11) weg von der zweiten Rolle (12) ausgestaltet ist.

4. Rollensortiereinrichtung nach Anspruch 3, wobei die erste Rolle (11) mittels einer Gelenkwelle (151) in zwei Teile (111, 112) unterteilt ist, und wobei der eine Teil (111) der ersten Rolle (11) mittels der Gelenkwelle (151) in die Drehung um ihre Rollenachse (11a) antreibbar ist, und der andere Teil (112) der ersten Rolle (11) an der Gelenkwelle (151) aus der Richtung ihrer Rollenachse (11a) und von der zweiten Rolle (12) weg schwenkbar ist.

5. Rollensortiereinrichtung nach Anspruch 3, wobei die erste Rolle (11) das Rollenanordnungsänderungselement (15) als eine Einheit (152) aufweist, welche derart ausgestaltet ist, dass diese Einheit ein von der Drehung der ersten Rolle entkoppeltes angefastes Element umfasst.

6. Rollensortiereinrichtung nach Anspruch 5, wobei die Einheit (152) derart ausgestaltet ist, dass sie durch eine Drehbewegung um einen vorbestimmten Winkel in Richtung einer Drehbewegung um die Rollenachse (11 a) der ersten Rolle (11) den Abstand zwischen der ersten und zweiten Rolle (11, 12) vergrößert, um schlecht sortierte Vorformlinge (2) zwischen der ersten und zweiten Rolle (11, 12) auszuschleusen.

7. Rollensortiereinrichtung nach einem der vorangehenden Ansprüche, wobei das Rollenanordnungsänderungselement (15) motorisch oder pneumatisch antreibbar ist, und wobei vorzugsweise die motorische Betätigung über Zahnstange oder Zahnriemen erfolgt.

8. Rollensortiereinrichtung nach einem der vorangehenden Ansprüche, wobei das Rollenanordnungsänderungselement (15) in Bezug auf die Transportrichtung (P) der Vorformlinge (2) in der Rollensortiereinrichtung (10) am Ende der Rollensortiereinrichtung (10) angeordnet ist.

9. Rollensortiereinrichtung nach einem der vorangehenden Ansprüche, wobei das Rollenanordnungsänderungselement (15) entlang von Linearführungen (42) bewegt werden kann.

10. Sortierverfahren zum Sortieren von Vorformlingen (2) mit einer Rollensortiereinrichtung (10), die eine erste Rolle (11), welche um ihre Rollenachse (11a) drehbar antreibbar ist, und eine zweite Rolle (12a) umfasst, welche um ihre Rollenachse(12a) gegenläufig zu der Drehung der ersten Rolle (11) drehbar antreibbar ist und derart beabstandet von der ersten Rolle (11) angeordnet ist, dass ihre Rollenachsen (11a, 12a) im Wesentlichen parallel zueinander angeordnet sind, mit dem Schritt Erfassen verklemmter und/oder fehlerhafter Vorformlinge (2) an der ersten und zweiten Rolle (11, 12),
**gekennzeichnet durch** den Schritt
Ändern der Anordnung der ersten oder zweiten Rolle (11, 12) zueinander, wenn die Erfassungseinrichtung (14) verklemmte Vorformlinge (2) erfasst.

## Claims

1. Roll sorter device (10) for sorting preforms (2) with a first roll (11) which can be driven rotatably about its roll axis (11a), a second roll (12) which can be driven rotatably about its roll axis (12a) in the opposite direction to the rotation of the first roll (11) and is arranged spaced from the first roll (11) such that their roll axes (11 a, 12a) are arranged substantially parallel to each other, and a detection device (14) to detect seized and / or faulty preforms (2) on the first and second roll (11, 12), **characterized in that** the device comprises a roll arrangement modification element (15) to modify the arrangement of the first and second roll (11, 12) to each other when the detection device (14) detects seized preforms.

2. Roll sorter device according to claim 1, wherein the roll arrangement modification element (15) is designed to offset the first and second roll (11, 12) against each other by a predetermined distance (L).

3. Roll sorter device according to claim 1, wherein the roll arrangement modification unit (15) is designed to swivel a part (111) of the first roll (11) away from the second roll (12).

4. Roll sorter device according to claim 3, wherein the first roll (11) is sub-divided by means of a cardan shaft (151) into two parts (111, 112) and wherein the one part (111) of the first roll (11) can be driven by means of the cardan shaft (151) in rotation about its roll axis (11 a), and the other part (112) of the first roll (11) can be swivelled out of the direction its roll axis (11 a) at the cardan shaft (151) and away from the second roll (12).

5. Roll sorter device according to claim 3, wherein the first roll (11) has the roll arrangement modification element (15) as a unit (152) designed so that this unit comprises an element chamfered and decoupled from rotation of the first roll.

6. Roll sorter device according to claim 5, wherein the unit (152) is designed such that it enlarges the distance between the first and second rolls (11, 12) by a rotary movement through a predetermined angle in the direction of a rotary movement about the roll axis (11 a) of the first roll (11), in order to expel poorly sorted preforms (2) between the first and second rolls (11, 12).

7. Roll sorter device according to any of the preceding claims, wherein the roll arrangement modification element (15) can be driven motorised or pneumatically and wherein preferably the motorised activation takes place via a toothed rod or toothed belt.

8. Roll sorter device according to any of the preceding claims, wherein the roll sorter arrangement modification element (15) is arranged at the end of the roll sorter device (10) in relation to the transport direction (P) of the preforms (2) in the roll sorter device (10).

9. Roll sorter device according to any of the preceding claims, wherein the roll arrangement modification element (15) can be moved along linear guides (42).

10. Sorting method for sorting preforms (2) with a roll sorter device (10) which comprises a first roll (11) that can be driven rotatably about its roll axis (11a) and a second roll (12) which can be driven rotatably about its roll axis (12a) opposite the rotation of the first roll (11) and is arranged spaced from the first roll (11) such that the roll axes (11 a, 12a) are arranged substantially parallel to each other, with the steps of detection seized and / or faulty preforms (2) on the first and second roll (11, 12) **characterized by** the step of modification of the arrangement of the first or second roll (11, 12) to each other when the detection device (14) detects seized preforms (2).

## Revendications

1. Dispositif de triage à rouleaux (10) permettant de trier des préformes (2), avec un premier rouleau (11) entraînable en rotation autour de son axe de rouleau (11a), un deuxième rouleau (12) entraînable en rotation autour de son axe de rouleau (12a) dans le sens opposé à la rotation du premier rouleau (11) et espacé du premier rouleau (11) de telle manière que les axes desdits rouleau (11a, 12a) s'étendent sensiblement parallèlement l'un à l'autre,
un dispositif de détection (14) permettant de détecter des préformes (2) coincées et/ou défectueuses sur le premier et le deuxième rouleau (11, 12), **caractérisé en ce que** ledit dispositif comporte un élément de modification de disposition de rouleau (15) permettant de modifier la disposition du premier et du deuxième rouleau (11, 12) l'un par rapport à l'autre quand le dispositif de détection (14) détecte des préformes coincées.

2. Dispositif de triage à rouleaux selon la revendication 1, où l'élément de modification de disposition de rouleau (15) est prévu pour déplacer le premier et le deuxième rouleau (11, 12) d'un intervalle (L) défini l'un par rapport à l'autre.

3. Dispositif de triage à rouleaux selon la revendication 1, dans lequel l'élément de modification de disposition de rouleau (15) est prévu pour pivoter une partie (111) du premier rouleau (11) en l'éloignant du deuxième rouleau (12).

4. Dispositif de triage à rouleaux selon la revendication 3, dans lequel le premier rouleau (11) est divisé en deux parties (111, 112) par un arbre articulé (151), et dans lequel l'une partie (111) du premier rouleau (11) est entraînable en rotation autour de son axe de rouleau (11a) au moyen de l'arbre articulé (151), et l'autre partie (112) du premier rouleau (11) peut être pivotée de son axe de rouleau (11a) sur l'arbre articulé (151), en l'éloignant du deuxième rouleau (12).

5. Dispositif de triage à rouleaux selon la revendication 3, dans lequel le premier rouleau (11) comporte l'élément de modification de disposition de rouleau (15) en tant qu'unité (152) réalisée de telle manière que ladite unité comprend un élément chanfreiné désolidarisé de la rotation du premier rouleau.

6. Dispositif de triage à rouleaux selon la revendication 5, dans lequel l'unité (152) est réalisée de manière à agrandir l'intervalle entre le premier et le deuxième rouleau (11, 12) par un mouvement de rotation suivant un angle défini dans la direction d'un mouvement de rotation autour de l'axe de rouleau (11a) du premier rouleau (11), pour évacuer des préformes (2) mal triées entre le premier et le deuxième rouleau (11, 12).

7. Dispositif de triage à rouleaux selon l'une des revendications précédentes, dans lequel l'élément de modification de disposition de rouleau (15) est entraînable par moteur ou par air comprimé, et dans lequel l'actionnement par moteur est obtenu préférentiellement par le biais d'une crémaillère ou d'une courroie dentée.

8. Dispositif de triage à rouleaux selon l'une des revendications précédentes, dans lequel l'élément de modification de disposition de rouleau (15) est disposé à l'extrémité du dispositif de triage à rouleaux (10) par rapport à la direction de transport (P) des préformes (2) dans ledit dispositif de triage à rouleaux (10).

9. Dispositif de triage à rouleaux selon l'une des revendications précédentes, dans lequel l'élément de modification de disposition de rouleau (15) peut être déplacé le long de guidage linéaires (42).

10. Procédé de tri, permettant de trier des préformes (2) au moyen d'un dispositif de triage à rouleaux (10) comprenant un premier rouleau (11) entraînable en rotation autour de son axe de rouleau (11a) et un deuxième rouleau (12) entraînable en rotation autour de son axe de rouleau (12a) dans le sens opposé à la rotation du premier rouleau (11) et espacé du premier rouleau (11) de telle manière que les axes desdits rouleau (11a, 12a) s'étendent sensiblement parallèlement l'un à l'autre, comprenant l'étape de détection de préformes (2) coincées et/ou défectueuses sur le premier et le deuxième rouleau (11, 12), **caractérisé par** l'étape de modification de la disposition du premier ou du deuxième rouleau (11, 12) l'un par rapport à l'autre quand le dispositif de détection (14) détecte des préformes (2) coincées.
